# EUROPEAN PATENT SPECIFICATION

(11) **EP 3 548 343 B1**
(45) Date of publication and mention of the grant of the patent: **27.04.2022**
(21) Application number: 17876578.0
(22) Date of filing: 29.11.2017
(51) Int. Cl.: B60S 1/24, B60S 1/34, B60S 1/04

(54) **A WIPER SYSTEM FOR A VEHICLE**
WISCHERSYSTEM FÜR EIN FAHRZEUG
SYSTÈME D'ESSUIE-GLACE POUR VÉHICULE

(30) Priority: 02.12.2016 CN 201621330635 U
(43) Date of publication of application: 09.10.2019
(73) Proprietor: Taizhou Valeo Wenling Automotive Systems Co., Ltd., Wenling Taizhou Zhejiang 317500 (CN)
(72) Inventor: TIAN, Shuqian, Taizhou Zhejiang 317500 (CN); CHEN, Jian, Taizhou Zhejiang 317500 (CN); GRANDJEAN, Denis, Taizhou Zhejiang 317500 (CN)
(74) Representative: Valeo Visibility
(86) International application number: PCT/CN2017/113496
(87) International publication number: WO 2018/099385

(56) References cited:
- EP-B1- 0 424 834
- WO-A1-01/92072
- CN-A- 104 071 125
- CN-A- 104 276 141
- CN-U- 203 637 772
- CN-U- 206 297 533
- DE-A1- 4 444 066
- DE-A1- 19 824 640
- JP-B2- 3 759 331
- US-A1- 2009 007 362
- US-A1- 2009 007 362

## Description

### TECHNICAL FIELD

The invention relates to a wiper system for a vehicle.

### BACKGROUND

In order to ensure a good field of view, a wiper system is always installed on a vehicle. The wiper system is used for not only scraping the rain or snow falling on the windshield in raining or snowing weather, but also removing the dirt accumulated on the windshield.

A wiper system generally comprises a motor, a reducer connected to the motor to reduce the rotation speed of the motor, a crank with one end connected to an output shaft of the reducer, a four-linkage system connected to the other end of the crank, a pivot shaft driven by the four-linkage system, and a wiper arm and a wiper blade mounted on the pivot shaft. Thus, when the motor is rotated continuously, the wiper blade is driven to swing reciprocally against the windshield by the four-linkage system so as to scrape the dirt, the rain or the snow, or the like on the windshield.

Traditional wiper systems comprise two types, one is a wiper in which two pivot shafts are rotated in same direction such that two wiper blades swing in same direction, also referred as to a tandem wiper; the other is a wiper in which two wiper blades swing oppositely, also referred as to a butterfly wiper. However, the butterfly wiper needs to avoid the mutual interference between the wipers during the scraping.

In addition, in order to expand the area scraped by the wiper to achieve a better field of view, the traditional tandem wiper cannot meet the requirement already. In view of this, an extended wiper system was proposed.

For example, in prior art, it is disclosed a extended wiper system which comprises a motor pivotable reciprocally, a reducer connected to the motor to reduce rotation speed of the motor, a crank fixed on an output shaft of the reducer, two link rods pivotably connected to two ends of the crank on opposite sides of a connecting point between the crank and the output shaft, and two pivot shaft systems pivotably connected to the link rods. In said wiper system, a first pivot shaft system of the two pivot shaft systems comprises a first pivot shaft driving the wiper arm and the wiper blade and pivotably fixed on a body or frame of the vehicle, and a lever having an end fixed to the first pivot shaft and the other end pivotably connected one of the link rods. A second pivot shaft system of the two pivot shaft systems comprises two pivot shafts, i.e. a second pivot shaft and a third pivot shaft, wherein the second pivot shaft is pivotably connected to the other one of the link rods by the lever, and a four-linkage structure is provided between the second pivot shaft and the third pivot shaft, and functions such that a rotation direction of the third pivot shaft is opposite to that of the second pivot shaft, and in turn the rotation direction of the third pivot shaft is same as that of the first pivot shaft. In addition, a second wiper arm and an extended arm may be pivotably connected to one of the link rods so as to make the second wiper arm and the blade to a larger ranger by the four-linkage system.

However, in this extended wiper system, since the second pivot shaft is not fixed relative to the body of vehicle and swings with the movement of the second link rod, the movement range of the entire system is rendered larger and thus a larger space inside the vehicle is occupied. US-A-2009/007362 shows the preamble of claim 1.

### SUMMARY

To this end, in order to overcome the defects in the prior art, the invention is proposed which aims for an extended wiper system, by which not only a larger scraping area may be achieved but also the entire wiper system is made compact to occupy smaller space inside the vehicle.

According to one aspect of the invention, a wiper system is provided, comprising:
first and second wiper arms;
a motor including an output shaft, which is reciprocally pivoted and outputs driving force when the motor is powered;
a crank fixed on the output shaft;
first and second link rods which are pivotably connected to two ends of the crank;
a first pivot shaft assembly connected between the first link rod and the first wiper arm for reciprocally pivoting the first wiper arm;
a second pivot shaft assembly connected between the second link rod and the second wiper arm for reciprocally pivoting the second wiper arm; and
a wiper arm assembly mounted on the second pivot shaft assembly so as to be driven by the second pivot shaft assembly,
wherein the first pivot shaft assembly includes:
   a first pivot shaft on which the first wiper arm is fixed; and
   a first pivot shaft lever which is fixed on the first pivot shaft so as to be rotated together with the first pivot shaft and pivotably connected to the first link rod,
   wherein the second pivot shaft assembly includes:
second and third pivot shafts; and
a second pivot shaft lever which is fixed on the second pivot shaft so as to be rotated together with the second pivot shaft and pivotably connected to the second link rod, and
wherein the wiper arm assembly includes:
   first and third links which are respectively fixed on the second pivot shaft and the third pivot shaft, so as to be rotated with the second and third pivot shafts, respectively; and
   the second wiper arm in which the first link is pivotably connected with a first end of the second wiper arm and the third link is pivotably connected with the second wiper arm at a position between the first end and a second end of the second wiper arm.

Preferably, the wiper arm assembly is mounted at outside of a body of the vehicle.

Preferably, the first link rod has a smaller length than that of the second link rod, and more preferably, the length of the first link rod is one third of that of the second link rod.

Preferably, the first pivot shaft lever and the second pivot shaft lever are both reciprocally rotated at same one side of a line connecting the first pivot shaft and the second pivot shaft.

According to the invention, since the second wiper arm is mounted on the second and third pivot shaft by the first link rod and the third link rod, the range to which the second wiper arm may reach is extended.

Additionally, since the first link rod, the third link rod and the second wiper arm are provided outside the body of the vehicle so as not to occupy the space inside the vehicle, the space inside the vehicle needed for the entire wiper system is saved.

Further, since the second pivot shaft and the third pivot shaft are remained fixed relative to the body of the vehicle, the space needed for the second pivot shaft is saved, which is different from that in the prior art.

Further, the first pivot shaft lever and the second pivot shaft lever swing reciprocally on the same side of the line connecting the first pivot shaft and the second pivot shaft, the space inside the vehicle needed for the entire wiper system is saved.

### BRIEF DESCRIPTION OF THE DRAWINGS

Further purposes, features and advantages thereof will be understood in the following detailed description of the preferred embodiments of the invention with reference to the drawings, in which:
Figure 1 is a perspective view showing a wiper system according to a preferred embodiment of the invention;
Figure 2 is a partial side view showing the wiper system according to the preferred embodiment of the invention;
Figure 3 is a top view showing the wiper system according to the preferred embodiment of the invention;
Figure 4 is a view showing envelope lines of movements in various positions of the wiper system according to a preferred embodiment of the invention;
Figure 5 is a view showing the wiper system in a rest position according to a preferred embodiment of the invention;
Figure 6 is a view showing the wiper system in a middle position according to a preferred embodiment of the invention, wherein the second wiper arm is in a most extended position;
Figure 7 is a view showing the wiper system in an external wiping position according to a preferred embodiment of the invention; and
Figure 8 is a schematic view showing a comparison of wiping ranges between the wiper system according to a preferred embodiment of the invention and a traditional wiper system.

### DETAILED DESCRIPTION

Below a wiper system according to the preferred embodiments of the present invention will be described in detail with reference to the drawings. In addition, it is to be noticed that in the following description and the appended claims, the terms "upper side" and "lower side" refer to the upper side and lower side in a situation in which the wiper system is mounted on the vehicle. In addition, other directional terms mentioned in the following description, such as "leftward", "rightward" and the like refer to the directions in the specific drawing.

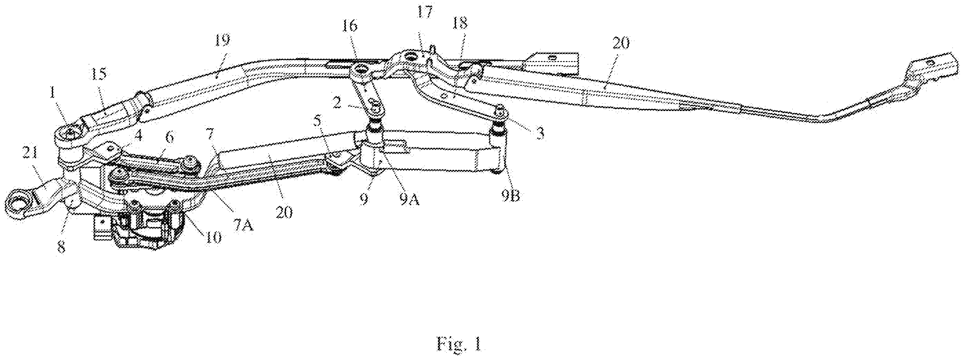

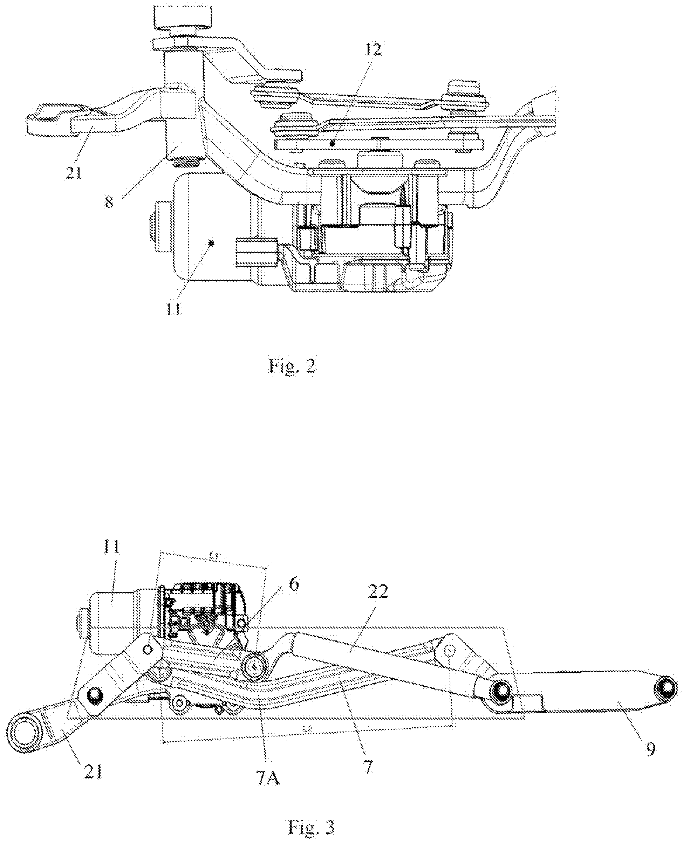

Figures 1 to 3 show a wiper system according to a preferred embodiment of the present invention, wherein figure 1 is a perspective view of the wiper system, figure 2 is a side view thereof, and figure 3 is a top view. In addition, in figure 3, a wiper arm and an extended arm as well as a four-linkage mechanism between a second pivot shaft and a third pivot shaft are omitted.

The wiper system 100 shown in the figures is for example mounted at a lower edge of a windshield to wiping the windshield, and comprises a motor 11. The motor 11 has a reducing mechanism, such as a worm and worm wheel reducer. However, the present invention is not limited to this and the reducer may be omitted in the situation that rotation speed of the motor 11 meets the requirement. The motor 11 (comprising the reducing mechanism) has an output shaft which can pivot reciprocally in two directions. As shown in figure 2, the motor 11 is provided below a first frame member and closer to an end of the wiper system 100. The motor 11 may be fixed on the first frame member 10 for example by a fastener.

As shown in figure 2, the output shaft of the motor 11 passes through a through-hole on the first frame member 10 from a lower side of the first frame member 10 and protrudes onto an upper side of the first frame member 10. On the upper side of the first frame member 10, a crank 12 is, at a roughly middle position thereof, fixed on a distal portion of the output shaft, and is rotated with the output shaft integrally.

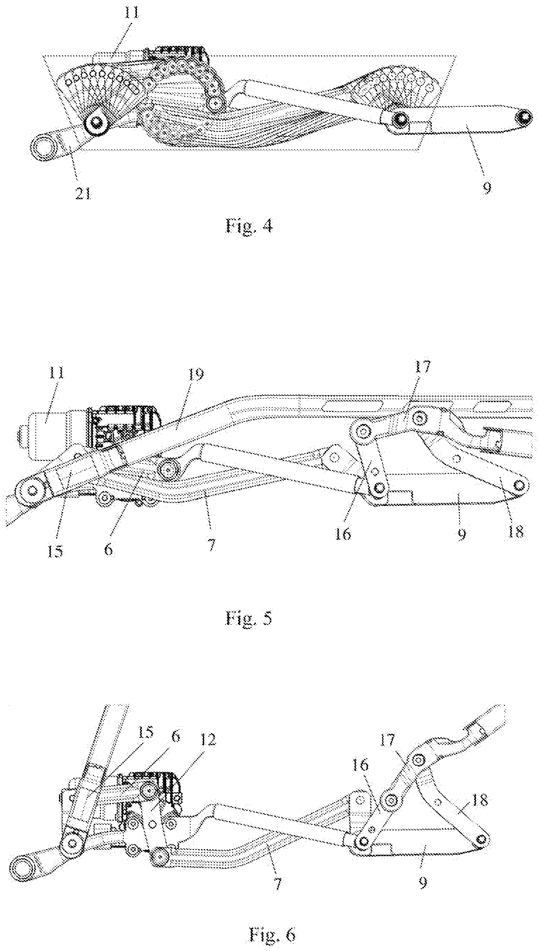

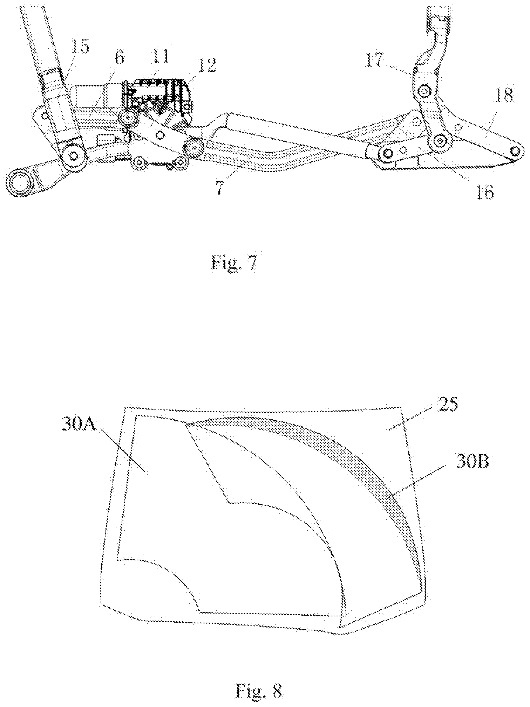

The crank 12 is in a generally curved shape in a top view, such as a shape of banana (ref. figures 6 and 7). Also one end of a first link rod is pivotably connected to one end of the crank 12, for example by a ball joint. One end of a second link rod is pivotably connected to the other end of the crank 12 for example also by a ball joint, that is to say, the first link rod and the second link rod are connected to the both end of the crank 12, respectively, and the crank 12 is fixed to the output shaft of the motor 12 at a position between the two ends thereof, for example at the generally middle position.

The first link rod 6 and the second link rod 7 are connected to the crank 12 on an axial side (for example, upper side) of the crank 12 along a direction of the output shaft (the vertical direction of the vehicle). The second link rod 7 has a curved portion 7A at generally one third of the length along its longitudinal direction in a plane perpendicular to the output shaft. As shown in figure 3, the curved portion 7A is curved toward the first link rod 6 side, which on one hand avoids the interference between the first link rod and the second link rod when the crank moves reciprocally in a forward direction and a backward direction, on the other hand causes the first link rod and the second link rod as closer as possible to make the entire wiper system compact.

A first pivot shaft holder 8 is integrally formed on the first frame member 10 to pivotably support the first pivot shaft 1. An end of the wiper arm 15 may be fixed on the first pivot shaft 1, an extended arm 19 may be swingably mounted on a free end of the wiper arm 15, and the other end of the extended arm 19 may be mounted with a wiper blade (not shown).

A first pivot shaft lever 4 is fixed on the first pivot shaft 1 in order that the first pivot shaft lever 4 and the first pivot shaft 1 are pivoted integrally. The other end of the first link rod 6 which is not connected to the crank 12 is pivotably connected to the swing end of the first pivot shaft lever 4 in order to push the first pivot shaft lever 4 to swing and in turn to rotate the first pivot shaft 1.

A second frame member 9 is rigidly connected to the first frame member 10 by a fixing tube 22, for example, the first frame member 10, the fixing tube 22 and the second frame member 9 are formed integrally. Also the entirety of the first frame member 10, the fixing tube 22 and the second frame member 9 is for example fixed on a body of the vehicle by screws. As shown in figures, on a side of the first pivot shaft holder 8 there is extended a fixing arm 21, the fixing arm 21 is provided with a through-hole at one end thereof, through which a screw passes and is fastened on the body of the vehicle to fix the entirety of the frame.

The second frame member 9 is integrally formed with a second and a third pivot shaft holder 9A and 9B on two ends thereof, and the second pivot shaft 2 and the third pivot shaft 3 are pivotably fixed within the second and the third pivot shaft holder 9A and 9B, respectively.

As shown in figure 1, the second pivot shaft 2 protrudes out of both sides of the second frame member 9. A second pivot shaft lever 5 is fixed to an end of the second pivot shaft 2 which protrudes out of a lower side of the second pivot member 9, and is pivoted with the second pivot shaft 2 together. The swing end of the second pivot shaft lever 5 is pivotably connected to the other end of the second link rod 7 which is not connected to the crank 12 such as to be caused to swing by the second link rod 7 and further to cause the second pivot shaft 2 to rotate.

A first link rod 16, a second link rod 17 and third link rod 18 are connected between the second pivot shaft 2 and the third pivot shaft 3. Specifically, a first end of the first link rod 16 is fixed on the second pivot shaft 2 and a second end of the first link rod 16 is pivotably connected to a first end of the second link rod 17. A first end of the third link rod 18 is fixedly connected to the third pivot shaft, and an second end of the third link rod 18 is pivotably connected to for example an about middle position between the first end and the second end of the second link rod 17, the extended arm 20 is connected to the second end of the second link rod 17 and on the other end of the extended arm there may be mounted with for example a wiper blade (not shown), that is to say, the second link rod 17 acts as a wiper arm, and the extended arm 20 is swingably mounted on the free end of the second link rod 17 (the second wiper arm).

As shown in figures 2 and 3, the motor 10 is fixed close to the first pivot shaft, and the length L1 of the first link rod 6 is smaller than the length L2 of the second link rod 7, and preferably the length L1 of the first link rod 6 is generally one third of the length L2 of the second link rod 7.

In the present embodiment, the first pivot shaft 1 and the first pivot shaft lever 4 form a first pivot shaft assembly of the present invention, the second pivot shaft 2, the third pivot shaft 3 and the second pivot shaft lever 5 form a second pivot shaft assembly of the present invention, and the first link rod 16, the second link rod 17 (the second wiper arm) and the third link rod 18 form a wiper arm assembly of the present invention.

Below the operating mode of the wiper system according to the preferred embodiments of the present invention and the advantages thereof are described with reference to figures 4-8.

When the wiper system is not started, as shown in figure 5, the wiper arms 15 and 17 are positioned substantially along the lower edge of the windshield 25 (shown in figure 8), at this point, the first link rod 6 and the second link rod 7 are substantially arranged in parallel with each other, and at this point, the wiper system occupies a smallest space, as shown in figure 3.

When the wiper system is started for example by a shifting lever under the steering wheel, the motor 11 firstly rotates anticlockwise to bring the first link rod 6 and the second link rod 7 to move in opposite directions, for example, the first link rod 6 moves leftward in figure 5 so as to push the first pivot shaft lever 4 to move anticlockwise and in turn to push the first pivot shaft 1 to rotate anticlockwise. The second link rod moves rightward in figure 5 so as to push the second pivot shaft lever 5 to rotate clockwise and in turn to push the second pivot shaft 2 to rotate clockwise. The clockwise rotation of the second pivot shaft 2 will bring the first link rod 16 to rotate clockwise, and further pull the first end of the second link rod 17 (the second wiper arm) towards the direction of the second frame, in the cooperation of the third link rod 18, to make the second link 17 (the second wiper arm) to swing anticlockwise, that is to say the two wiper arms swing in the same direction.

When swinging to the position shown in figure 6, the first link rod 6 and the second link rod 17 (the second wiper arm) are in a straight line, in which situation the second wiper arm is in its most extended position.

From the position shown in figure 6, the motor 11 continues to rotate anticlockwise, the first link rod and the second link rod move continuously according to the directions described above, such that the first pivot shaft 1 continues to rotate anticlockwise, and in turn the first wiper arm 15 continues to swing anticlockwise to a most outer wiping position; at the same time, the second link rod 7 continues to move rightward in figure 6, so as to continue to push the second pivot shaft lever 5 to rotate clockwise, such that the second pivot shaft 2 continues to rotate clockwise. The clockwise rotation of the second pivot shaft 2 cause the first link rod 16 to continue to swing downward in clockwise direction so as to push the connecting end of the second wiper arm 17 and the first link rod 16 rightward in the figure 6, such that the second wiper arm 17 swings to an outer wiping position anticlockwise, as shown in figure 7. Therefore, the range to which the second wiper arm can reach during the swinging is increased by the first link rod 16, the second link rod 17 (the second wiper arm) and the third link rod 18.

As shown in figure 8, a wiping region of the wiper system on the windshield 25 is shown in figure 8, wherein a hollow portion 30A represents a wiping region of a traditional wiper system and a shadow portion 30B represents an enlarged wiping region of the wiper system according to the preferred embodiments of the present invention.

Now return to refer to figure 4 which shows envelope lines of the movement of the crank, the first and second link rods, and the first and second pivot shaft levers during the movement of the wiper system. It can be seen from figure 4 that in the entire process of the movement, the whole envelope lines are limited within a long and narrow trapezoid with its height being not beyond the external edge of the motor and the external edge of the fixing arm and with its width being not beyond the external edge of the fixing arm and the midpoint of the second frame member. In addition, since the first link rod, the second link rod and the third link rod are fixed on the second pivot shaft and the third pivot shaft outside the body of the vehicle, the first link rod, the second link rod and the third link rod would not occupy the space inside the vehicle. Thus the space to be occupied by the entire wiper system is the space enclosed by the trapezoid and it can be seen therefore that the wiper system according to the present invention saves the space inside the vehicle.

It can be seen from the above description that, in the present invention, by mounting the motor close to the first pivot shaft to further shorten the length of the first link rod, by fixing the second and the third pivot shafts relative to the body of the vehicle, and by mounting the first link rod, the second link rod (the second wiper arm) and the third link rod outside the body of the vehicle, the space inside the vehicle occupied by the entire wiper system is save at the same time that the range to which the wiper system can reach is increased.

Although the invention is described above in detail with reference to the drawings and the preferred embodiments of the invention, those skilled in the art could understand that a variety of modifications and variations can be made without departing from the idea of the invention. Thus the scope of the invention should not be limited to the specific embodiments described above and should be defined by the claims appended.

## Claims

1. A wiper system for a vehicle, comprising:
first and second wiper arms (15, 17);
a motor (11) including an output shaft, which is reciprocally pivoted and outputs driving force when the motor is powered;
a crank (12) fixed on the output shaft;
first and second link rods (6, 7) which are pivotably connected to two ends of the crank;
and further comprising:
a first pivot shaft assembly connected between the first link rod (6) and the first wiper arm (15) for reciprocally pivoting the first wiper arm (15);
a second pivot shaft assembly connected between the second link rod (7) and the second wiper arm (17) for reciprocally pivoting the second wiper arm (17) ; and
a wiper arm assembly mounted on the second pivot shaft assembly so as to be driven by the second pivot shaft assembly,
wherein the first pivot shaft assembly includes:
a first pivot shaft (1) on which the first wiper arm (15) is fixed; and
a first pivot shaft lever (4) which is fixed on the first pivot shaft (1) so as to be rotated together with the first pivot shaft and pivotably connected to the first link rod (6),
the wiper system is **characterized by** the second pivot shaft assembly includes:
second and third pivot shafts (2, 3) ; and
a second pivot shaft lever (5) which is fixed on the second pivot shaft (2) so as to be rotated together with the second pivot shaft (2) and pivotably connected to the second link rod (7), and
wherein the wiper arm assembly includes :
first and third links (16, 18) which are respectively fixed on the second pivot shaft (2) and the third pivot shaft (3), so as to be rotated with the second and third pivot shafts (2, 3), respectively; and
the second wiper arm (17) in which the first link (16) is pivotably connected with a first end of the second wiper arm (17) and the third link (18) is pivotably connected with the second wiper arm (17) at a position between the first end and a second end of the second wiper arm (17).

2. The wiper system according to claim 1, wherein the wiper arm assembly is to be mounted at outside of a body of the vehicle.

3. The wiper system according to claim 1, wherein the first pivot shaft (1), the second pivot shaft (2) and the third pivot shaft (3) are pivotably fixed with respect to a body of the vehicle.

4. The wiper system according to claim 1, wherein the first pivot shaft (1) and the second pivot shaft (2) are rotated in opposite directions.

5. The wiper system according to claim 1, wherein the first pivot shaft lever (4) and the second pivot shaft lever (5) are both reciprocally rotated at one side of a line connecting the first pivot shaft (1) and the second pivot shaft (2).

6. The wiper system according to claim 1, wherein the first link rod (6) has a length (L1) shorter than a length (L2) of the second link rod (7).

7. The wiper system according to claim 6, wherein the length (L1) of the first link rod (6) is about one third of the length (L2) of the second link rod (7).

8. The wiper system according to claim 6, wherein the second link rod (7) has a bent portion (7A).

9. The wiper system according to any one of claims 1 to 8, wherein the first and second link rods (6, 7) are respectively connected with the two ends of the crank (12) through ball joints.

10. The wiper system according to any one of claims 1 to 8, further comprising a frame member(10, 9), wherein the frame member (10, 9) supports the motor (11), the first, second and third pivot shafts (1, 2, 3).

11. The wiper system according to claim 10, wherein in a direction of the output shaft, the motor (11) and the crank (12) are respectively mounted on a upper side and a lower side of the frame member (10, 9).

12. The wiper system according to claim 10, wherein the frame member includes a first frame member (10) and a second frame member (9), wherein the motor (11) and the first pivot shaft (1) are fixed on the first frame member (10), and the second and third pivot shafts (2, 3) are pivotably fixed on the second frame member (9).

13. The wiper system according to claim 12, wherein the first and second frame members are rigidly connected into one piece.

## Patentansprüche

1. Wischersystem für ein Fahrzeug, umfassend:
einen ersten und einen zweiten Wischerarm (15, 17),
einen Motor (11) einschließlich einer Abtriebswelle, die reziprok geschwenkt wird und Antriebskraft abgibt, wenn der Motor angetrieben wird,
eine Kurbel (12), die an der Abtriebswelle befestigt ist,
eine erste und eine zweite Verbindungsgliedstange (6, 7), die schwenkbar mit zwei Enden der Kurbel verbunden sind,
und ferner umfassend:
eine erste Verschwenkwellenanordnung, die zwischen der ersten Verbindungsgliedstange (6) und dem ersten Wischerarm (15) verbunden ist, um den ersten Wischerarm (15) reziprok zu schwenken,
eine zweite Verschwenkwellenanordnung, die zwischen der zweiten Verbindungsgliedstange (7) und dem zweiten Wischerarm (17) verbunden ist, um den zweiten Wischerarm (17) reziprok zu schwenken, und
eine Wischerarmanordnung, die an der zweiten Verschwenkwellenanordnung montiert ist, um von der zweiten Verschwenkwellenanordnung angetrieben zu werden,
wobei die erste Verschwenkwellenanordnung Folgendes aufweist:
eine erste Verschwenkwelle (1), an der der erste Wischerarm (15) befestigt ist, und
einen ersten Verschwenkwellenhebel (4), der an der ersten Verschwenkwelle (1) befestigt ist, so dass er zusammen mit der ersten Verschwenkwelle gedreht wird, und schwenkbar mit der ersten Verbindungsgliedstange (6) verbunden ist,
wobei das Wischersystem **dadurch gekennzeichnet ist, dass** die zweite Verschwenkwellenanordnung Folgendes aufweist:
eine zweite und eine dritte Verschwenkwelle (2, 3), und
einen zweiten Verschwenkwellenhebel (5), der an der zweiten Verschwenkwelle (2) befestigt ist, so dass er zusammen mit der zweiten Verschwenkwelle (2) gedreht wird, und schwenkbar mit der zweiten Verbindungsgliedstange (7) verbunden ist, und
wobei die Wischerarmanordnung Folgendes aufweist:
ein erstes und ein drittes Verbindungsglied (16, 18), die an der zweiten Verschwenkwelle (2) bzw. der dritten Verschwenkwelle (3) befestigt sind, um mit der zweiten bzw. dritten Verschwenkwelle (2, 3) gedreht zu werden, und
den zweiten Wischerarm (17), bei dem das erste Verbindungsglied (16) schwenkbar mit einem ersten Ende des zweiten Wischerarms (17) verbunden ist und das dritte Verbindungsglied (18) an einer Position zwischen dem ersten Ende und einem zweiten Ende des zweiten Wischerarms (17) schwenkbar mit dem zweiten Wischerarm (17) verbunden ist.

2. Wischersystem nach Anspruch 1, wobei die Wischerarmanordnung an der Außenseite einer Karosserie des Fahrzeugs zu montieren ist.

3. Wischersystem nach Anspruch 1, wobei die erste Verschwenkwelle (1), die zweite Verschwenkwelle (2) und die dritte Verschwenkwelle (3) bezüglich einer Karosserie des Fahrzeugs schwenkbar befestigt sind.

4. Wischersystem nach Anspruch 1, wobei die erste Verschwenkwelle (1) und die zweite Verschwenkwelle (2) in entgegengesetzten Richtung gedreht werden.

5. Wischersystem nach Anspruch 1, wobei sowohl der erste Verschwenkwellenhebel (4) als auch der zweite Verschwenkwellenhebel (5) reziprok an einer Seite einer die erste Verschwenkwelle (1) und die zweite Verschwenkwelle (2) verbindenden Linie gedreht werden.

6. Wischersystem nach Anspruch 1, wobei die erste Verbindungsgliedstange (6) eine Länge (L1) hat, die kürzer als eine Länge (L2) der zweiten Verbindungsgliedstange (7) ist.

7. Wischersystem nach Anspruch 6, wobei die Länge (L1) der ersten Verbindungsgliedstange (6) ungefähr ein Drittel der Länge (L2) der zweiten Verbindungsgliedstange (7) beträgt.

8. Wischersystem nach Anspruch 6, wobei die zweite Verbindungsgliedstange (7) einen gebogenen Abschnitt (7A) hat.

9. Wischersystem nach einem der Ansprüche 1 bis 8, wobei die erste und die zweite Verbindungsgliedstange (6, 7) durch Kugelgelenke jeweils mit den beiden Enden der Kurbel (12) verbunden sind.

10. Wischersystem nach einem der Ansprüche 1 bis 8, ferner umfassend ein Rahmenglied (10, 9), wobei das Rahmenglied (10, 9) den Motor (11), die erste, die zweite und die dritte Verschwenkwelle (1, 2, 3) stützt.

11. Wischersystem nach Anspruch 10, wobei der Motor (11) und die Kurbel (12) in einer Richtung der Abtriebswelle jeweils an einer oberen Seite bzw. einer unteren Seite des Rahmenglieds (10, 9) montiert sind.

12. Wischersystem nach Anspruch 10, wobei das Rahmenglied ein erstes Rahmenglied (10) und ein zweites Rahmenglied (9) aufweist, wobei der Motor (11) und die erste Verschwenkwelle (1) an dem ersten Rahmenglied (10) befestigt sind und die zweite und die dritte Verschwenkwelle (2, 3) schwenkbar an dem zweiten Rahmenglied (9) befestigt sind.

13. Wischersystem nach Anspruch 12, wobei das erste und das zweite Rahmenglied in ein Stück starr verbunden sind.

## Revendications

1. Système d'essuie-glace pour un véhicule, comprenant :
des premier et second bras d'essuie-glace (15, 17) ;
un moteur (11) comprenant un arbre de sortie, qui est animé d'un mouvement de pivotement alternatif et produit une force d'entraînement lorsque le moteur est alimenté ;
une manivelle (12) fixée sur l'arbre de sortie ;
des première et deuxième bielles (6, 7) qui sont raccordées de manière pivotante à deux extrémités de la manivelle ;
et comprenant en outre :
un premier ensemble formant pivot raccordé entre la première bielle (6) et le premier bras d'essuie-glace (15) pour communiquer un mouvement de pivotement alternatif au premier bras d'essuie-glace (15) ;
un second ensemble formant pivot raccordé entre la deuxième bielle (7) et le second bras d'essuie-glace (17) pour communiquer un mouvement de pivotement alternatif au second bras d'essuie-glace (17) ; et
un ensemble formant bras d'essuie-glace installé sur le second ensemble formant pivot de façon à être entraîné par le second ensemble formant pivot,
le premier ensemble formant pivot comprenant :
un premier pivot (1) sur lequel est fixé le premier bras d'essuie-glace (15) ; et
un premier levier de pivot (4) qui est fixé sur le premier pivot (1) de façon à tourner avec le premier pivot et raccordé de manière pivotante à la première bielle (6),
le système d'essuie-glace étant **caractérisé en ce que** le second ensemble formant pivot comprend :
des deuxième et troisième pivots (2, 3) ; et
un second levier de pivot (5) qui est fixé sur le deuxième pivot (2) de façon à tourner avec le deuxième pivot (2) et raccordé de manière pivotante à la deuxième bielle (7), et
l'ensemble formant bras d'essuie-glace comprenant :
des première et troisième bielles (16, 18) qui sont respectivement fixées sur le deuxième pivot (2) et le troisième pivot (3), de façon à tourner respectivement avec les deuxième et troisième pivots (2, 3) ; et
le second bras d'essuie-glace (17) dans lequel la première bielle (16) est raccordée de manière pivotante à une première extrémité du second bras d'essuie-glace (17) et la troisième bielle (18) est raccordée de manière pivotante au second bras d'essuie-glace (17) au niveau d'un emplacement entre la première extrémité et une seconde extrémité du second bras d'essuie-glace (17).

2. Système d'essuie-glace selon la revendication 1, dans lequel l'ensemble formant bras d'essuie-glace est destiné à être installé à l'extérieur d'une carrosserie du véhicule.

3. Système d'essuie-glace selon la revendication 1, dans lequel le premier pivot (1), le deuxième pivot (2) et le troisième pivot (3) sont fixés de manière pivotante par rapport à une carrosserie du véhicule.

4. Système d'essuie-glace selon la revendication 1, dans lequel le premier pivot (1) et le deuxième pivot (2) tournent dans des directions opposées.

5. Système d'essuie-glace selon la revendication 1, dans lequel le premier levier de pivot (4) et le second levier de pivot (5) tournent tous deux de manière alternative sur un côté d'une ligne reliant le premier pivot (1) et le deuxième pivot (2).

6. Système d'essuie-glace selon la revendication 1, dans lequel la première bielle (6) présente une longueur (L1) inférieure à une longueur (L2) de la deuxième bielle (7) .

7. Système d'essuie-glace selon la revendication 6, dans lequel la longueur (L1) de la première bielle (6) est égale à environ un tiers de la longueur (L2) de la deuxième bielle (7).

8. Système d'essuie-glace selon la revendication 6, dans lequel la deuxième bielle (7) comporte une partie coudée (7A).

9. Système d'essuie-glace selon l'une quelconque des revendications 1 à 8, dans lequel les première et deuxième bielles (6, 7) sont respectivement raccordées aux deux extrémités de la manivelle (12) par le biais de rotules.

10. Système d'essuie-glace selon l'une quelconque des revendications 1 à 8, comprenant en outre un élément d'ossature (10, 9), l'élément d'ossature (10, 9) supportant le moteur (11), les premier, deuxième et troisième pivots (1, 2, 3).

11. Système d'essuie-glace selon la revendication 10, dans lequel, dans une direction de l'arbre de sortie, le moteur (11) et la manivelle (12) sont respectivement installés sur un côté supérieur et un côté inférieur de l'élément d'ossature (10, 9).

12. Système d'essuie-glace selon la revendication 10, dans lequel l'élément d'ossature comprend un premier élément d'ossature (10) et un second élément d'ossature (9), dans lequel le moteur (11) et le premier pivot (1) sont fixés sur le premier élément d'ossature (10), et les deuxième et troisième pivots (2, 3) sont fixés de manière pivotante sur le second élément d'ossature (9).

13. Système d'essuie-glace selon la revendication 12, dans lequel les premier et second éléments d'ossature sont solidarisés en une seule pièce.
